(19) Europäisches Patentamt
European Patent Office
Office européen des brevets

(11) EP 0 728 703 B1

(12) **EUROPEAN PATENT SPECIFICATION**

(45) Date of publication and mention
of the grant of the patent:
**19.08.1998 Bulletin 1998/34**

(21) Application number: **94929666.9**

(22) Date of filing: **14.10.1994**

(51) Int. Cl.$^6$: **C02F 1/28**, C02F 1/42,
C02F 1/50, C02F 1/68

(86) International application number:
**PCT/JP94/01733**

(87) International publication number:
**WO 95/13245 (18.05.1995 Gazette 1995/21)**

(54) **PROCESS FOR PRODUCING WATER HAVING CLARIFYING ACTIVITY AND APPARATUS THEREFOR**

VERFAHREN UND VORRICHTUNG ZUR HERSTELLUNG VON WASSER MIT KLÄREIGENSCHAFTEN

PROCEDE ET APPAREIL DE PRODUCTION D'EAU PRESENTANT UNE ACTIVITE DE CLARIFICATION

(84) Designated Contracting States:
**AT BE CH DE DK ES FR GB GR IE IT LI MC NL PT SE**

(30) Priority: **09.11.1993 JP 302179/93**

(43) Date of publication of application:
**28.08.1996 Bulletin 1996/35**

(73) Proprietor: **HUKAI, Toshiko
Kitasaku-gun, Nagano 389-04 (JP)**

(72) Inventor: **HUKAI, Toshiharu
Kitasaku-gun Nagano 389-04 (JP)**

(74) Representative: **Betten & Resch
Reichenbachstrasse 19
80469 München (DE)**

(56) References cited:
| | |
|---|---|
| JP-A- 2 198 688 | JP-A- 3 118 894 |
| JP-A- 3 249 989 | JP-A- 4 141 292 |
| JP-A- 5 015 872 | JP-A- 5 057 291 |
| JP-A- 5 064 787 | JP-A- 5 123 671 |
| JP-U- 4 045 593 | JP-U- 4 045 594 |
| JP-U- 4 070 194 | JP-U- 5 022 094 |

**Description**

BACKGROUND OF THE INVENTION

Field of The Invention

This invention relates to method and apparatus for making water having purified and activated functions which is adapted for many applications such as of washings, drinks, rearing or breeding of animals and plants and the like.

Description of The Prior Art

Water chiefly employed in our daily life is city water or well water. We make use of city or well water along with foods or for drinking or for washing or bathing, or for rearing of agricultural products, fruits or plants. Moreover, such water is employed for raising or cultivation of fishes and shellfishes. Aside from city or well water, river water is also used in everyday life particularly for the crops.

City water is originated from rivers, lakes or dammed lakes. At present, not only water from these sources is suffering contamination, but also metals such as $Fe^{2+}$ increase in amount owing to the corrosion of water pipes. Thus, the contamination of city water is in progress year by year. To cope with this situation, sterilizing chlorine is incorporated in the city water in larger amounts, with the tendency that the city water is not suited for incorporation in foods or for drinks particularly in great cities. There is the view that when city water is continued to use as drinking water over a long time , some adverse influences appear on the health. Further, city water is employed for breeding of agricultural products, fruits or plants, or for cultivation of fishes and shellfishes, there may not be obtained the agricultural and marine products which are of good quality. In addition, with city or well water which is turned into hard water in which metals such as $Ca^{2+}$, $Mg^{2+}$, $Fe^{2+}$ and the like are contained, detergents for washing are required in amounts larger than those used in ordinary water. The use of such a large amount of a detergent may adversely influence environments.

It is known that contaminated city water is passed through magnets, active carbon or tourmaline to eliminate impurities therefrom thereby providing drinking water which is good to the health and that such water Is applied with an electric current to provide acidic water or alkaline water. However, hitherto known procedures are, respectively, intended for only one purpose and are not able to provide water which has a variety of effects and is used for many purposes.

JP-A-4-141292 discloses a powder having an activating function to activate water well by pulverizing combined bodies consisting of a tourmaline and aluminasilica which is smaller than the tourmaline and surrounds the tourmaline into a powder.

JP-A-5-123671 discloses a water purifing agent to remove macromolecular substances to purify water which comprises a porous ion exchanger.

JP-A-5-15872 discloses a two-bed water activating device, in which water is passed through ceramic grains.

Under these circumstances in the art, the present invention contemplates to treat water employed in daily life, such as city or well water, thereby providing water which has a number of advantages such as good cleansing function, bactericidal action, antifungal action, surface activity, cooling action, in vivo activating function and the like and has for its object the provision of method and apparatus for making purified and activated water by a simple arrangement without use of any electricity.

A method and an apparatus as respectively defined in independent claims 1 and 10 are provided by the present invention. The dependent claims define particular embodiments of the invention.

According to a particular embodiment of the invention water is first passed in the soft water generator containing an ion exchange resin to remove metal ions such as $Ca^{2+}$, $Mg^{2+}$, $Fe^{2+}$ and the like to provide soft water along with hydronium ions ($H_3O^+$) being generated.

The soft water is then passed in the ion generator having tourmaline and a metal therein. By this, hydronium ions ($H_3O^+$) are generated in large amounts and hydroxyl ions ($H_3O_2^-$) having a greater detergency than the hydronium ions are also generated. Because tourmaline emits a very weak energy (an electromagnetic wave with a wavelength of 4~14 micrometers), harmful gases and heavy metals are eliminated from the water by the action of the very weak energy. This eventually leads to the formation of water which is adapted for use as a drink and which expedites the growth of organisms. The metal exhibits bactericidal or fungicidal and bleaching actions or functions.

The passage through rock pieces having minus electrons contributes to further generation of hydronium ions ($H_3O^+$) and hydroxyl ions ($H_3O_2^-$). The minus electrons will produce a minus potential in the water, thereby producing the cooling effect of water and the effect of retarding evaporation of water.

BRIEF DESCRIPTION OF THE DRAWINGS

Fig. 1 is a sechamtic view showing an apparatus for making water having purified and activated functions according to one embodiment of the invention;

Fig. 2 is a schematic sectional view of a soft water generator used in the apparatus shown in Fig. 1;

Fig. 3 is a schematic sectional view of an essential part of the soft water generator used in the apparatus shown in Fig. 1; and

Fig. 4 is a scheamtic view showing an apparatus for making water having purified and activated functions according another embodiment of the invention.

PREFERRED EMBODIMENTS OF THE INVENTION

[First Example]

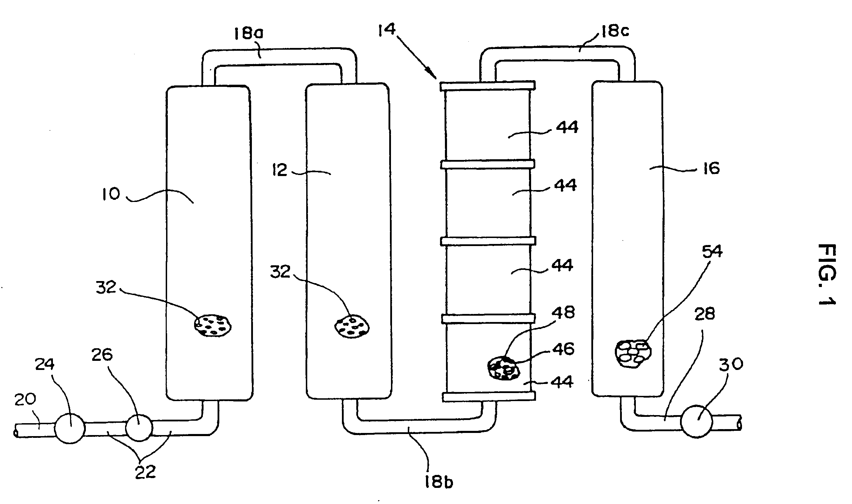

The examples of the invention are described. Fig. 1 is an illustrative view showing an example of an apparatus for making water having purified and activated functions according to the invention. A first soft water generator 10, a second soft water generator 12, an ion generator 14, and a rock accommodating container 16 are, respectively, connected through connecting pipes 18a, 18b and 18c connected in series.

In the first soft water generator 10, pressurized water such as, for example, city water, supplied to the first soft water generator 10 from a water supply pipe 20 through a connecting pipe 22. An on-off inlet valve 24 such as a bib cock between the water supply pipe 20 and the connecting pipe 22 with a check valve 26 being provided on the way of the connecting pipe 22. A delivery pipe 28 is provided at the outlet side of the rock accommodating container 16 and has an outlet on-off valve 30 at the tip of or on the way of the delivery pipe 28.

With city water, water fed from the water supply pipe 20 is passed to the first soft water generator 10, the second soft water generator 12, the ion generator 14 and the rock accommodating container 16 in this order and is taken out from the delivery pipe 28 by opening the on-off valve 30.

With the case other than city water, water stored in a water reservoir, not shown, is introduced through the supply pipe 20 into the first soft water generator 10. In the case, a check valve 26 is provided between a pump and the first soft water generator 10.

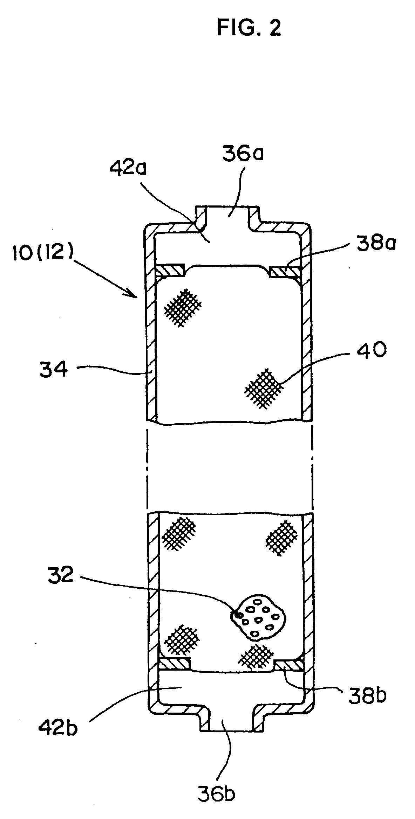

The first soft water generator 10 and the second soft water generator 12, respectively, contain a large quantity of a particulate ion exchange resin 32 therein, with its section being shown in Fig. 2. The soft water generators 10, 12 have, respectively, a body 24 which is cylindrical in shape and has water outlet and inlet ports 36a, 36b at upper and lower ends thereof, respectively. The cylindrical body 34 is provided with shield members 38a, 38b at inner surfaces kept slightly away from the upper and lower ends thereof as having, respectively, an opening at the center thereof. The ion exchange resin 32 contained in fine net 40 are accommodated between the paired shield members 38a, 38b.

The reason why the shield members 38 each having the opening at the center thereof are provided at the inner walls positioned slightly away from the outlet and inlet ports 36a, 36b is that the fine net 40 having the ion exchange resin 32 is placed between the paired shield members 38 to establish spaces 42a, 42b in the vicinity of the outlet and inlet portions 36a, 36b, respectively. The passage of water through the central openings of the shield members 38a, 38b permits invariable contact of water with the ion exchange resin 32. The reason why the ion exchange resin is placed in the net is that the particulate ion exchangeres in 32 can be wholly removed along with the net 40.

The first and second soft water generators 10 and 12 have, respectively, a height of 80 cm and an inner diameter of 10 cm, for example. The height of accommodation of the ion exchange resin 32 is set, for example, at 70 cm (permitting the upper and lower spaces 42a, 42b to be established). The height of accommodation of the ion exchange resin 32 should be at least sufficient to satisfactorily effect ion exchange. On the other hand, when the height of the accommodated ion exchange resin 32 is too great (e. g. over about 200 cm in the height of the accommodated ion exchange resin 32), the ion exchange resin becomes resistant to the passage of water, resulting in a reduced flow rate of water passing through the inside of the soft water generator. Accordingly, the height of the accommodated resin 32 should be determined as not reducing the flow rate.

The two containers for accommodating the ion exchange resin 32 are used. The reason for this is that the first and second soft water generators 10, 12 are suppressed in height to substantially such a level as the ion generator 14 and the rock accommodating container 16 and that it is avoided to reduce the flow rate owing to the pressure loss of water passing therethrough. Of course, the two soft water generators 10, 12 may be combined together to provide one soft water generator. Depending on the flow rate of water, the inner diameter of the soft water generators, the height of the accommodated ion exchange resin 32 and the number of the soft water generators connected in series may be optionally determined.

The ion exchange resin 32 serves to eliminate metal ions such as $Ca^{2+}$, $Mg^{2+}$, $Fe^{2+}$ and the like from water to provide soft water. The ion exchange resin 32 used is, for example, a strongly acidic cationic exchange resin ($RzSO_3Na$) obtained by uniform sulfonation of a sphere-shaped styrene・divinyl-benzenecopolymer. The ion exchange resin 32 undergoes the following ion exchange reaction with the metal ions such as $Ca^{2+}$, $Mg^{2+}$, $Fe^{2+}$ and the like.

$$2RzSO_3Na + Ca^{2+} \rightarrow (RzSO_3)_2Ca + 2Na^+$$

$$2RzSO_3Na + Mg^{2+} \rightarrow (RzSO_3)_2Mg + 2Na^+$$

$$2RzSO_3Na + Fe^{2+} \rightarrow (RzSO_3)_2Fe + 2Na^+$$

$Ca^{2+}$, $Mg^{2+}$, $Fe^{2+}$ and the like can be eliminated from water by passage through the ion exchange resin 32. The use of the strongly acidic cationic exchangeresin ($RzSO_3Na$) as the ion exchange resin 32 results in formation of sodiumions ($Na^+$). The ion exchange resin 32 may be one which is able to produce ions other than $Na^+$ and should preferably one which produces $Na^+$.

If city water is used, chlorine is contained aside from the metal ions such as $Ca^{2+}$, $Mg^{2+}$, $Fe^{2+}$ and the like. The chlorine undergoes no change when city water is passed through the ion exchange resin 32.

On the other hand, when water ($H_2O$) is passed through the ion exchange resin 32, the following changes take place

$$H_2O \rightarrow H^+ + OH^- \qquad (1)$$

$$H_2O + H^+ \rightarrow H_3O^+ \qquad (2)$$

As shown in (1) and (2) above, when water has been passed through the ion exchange resin 32, hydroxide ions ($OH^-$) and hydronium ions ($H_3O^+$) are produced. The resultant water has the surface activity owing to the existence of the hydronium ions ($H_3O^+$).

If hard water is used and passed through the ion exchange resin 32, the metal ions such as $Ca^{2+}$, $Mg^{2+}$, $Fe^{2+}$ and the like are eliminated from the water to provide soft water. The passage through the ion exchange resin 32 results in the generation of $Na^+$, $OH^-$ and hydronium ions ($H_3O^+$) in the water. Nevertheless, chlorine (Cl) in city water is passed as it is without undergoing ionization. It will be noted that depending on the type of ion exchange resin 32, $Na^+$ is not produced at all.

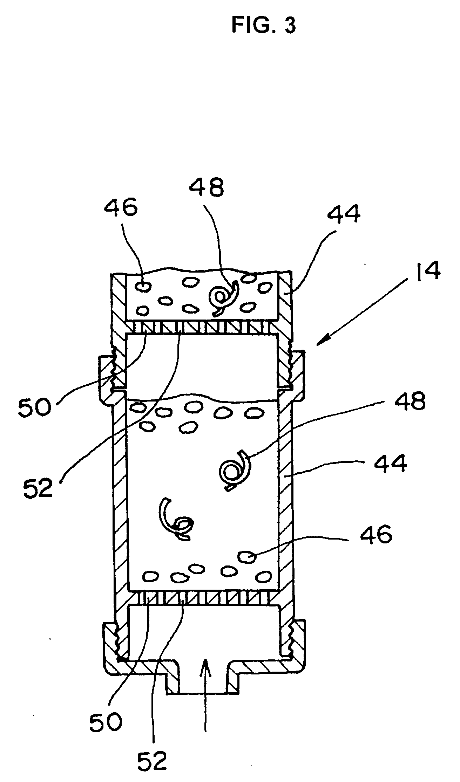

The partial sectional view of the ion generator 14 is shown in Fig. 3. The ion generator 14 has a plurality of cartridges 44 arranged in a similar manner and continuously connected in series vertically. The individual cartridges 44 have particulate tourmaline 46 and a plate metal 48 accommodated therein.

The tourmaline has plus and minus electrodes, with which an electromagnetic wave having a wavelength of 4~14 micrometers is applied to water, so that clusters of water are cleaved off thereby generating hydronium ions ($H_3O^+$). The electromagnetic wave having a wavelength of 4~14 micrometers has anenergy of 0.004 watts/cm$^2$.

The tourmaline 46 used herein may consist of fine pieces of tourmaline. Alternatively, the tourmaline 46 may be a tourmaline mixture called tourmaline pellets which are commercially available as containing tourmaline, a ceramic and aluminum oxide (which may contain silver therein at mixing ratios by weight of about 10:80:10. The ceramic contained in the tourmaline pellets acts to keep the plus and minus electrodes separated. The tourmaline 46 may be made by mixing not less than 10 wt% of tourmaline 46 with the ceramic and heating the mixture at 800°C or over by which such tourmaline disappeared within a given period of time under agitation in water (e. g. within about 3 months for a pellet diameter of 4 mm).

The metal 48 used may be at least one selected from aluminum, a stainless steel and silver. The metal 48 should preferably be one which is not corroded in water and is not soluble in water. In addition, it is preferred that the metal does not adversely influence the human body. When used as the metal 48, aluminum has the bactericidal or antifungal action and the bleaching function. Stainless steel has the bactericidal or antifungal action and the detergency-improving action and silver has the bactericidal or antifungal action. Although aluminum has the bleaching action and stainless steel has the detergency improving action, silver is greater in bactericidal or antifungal activity than aluminum and stainless steel. Accordingly, if bleaching action is necessary along with improved bactericidal or antifungal action, silver is mixed with aluminum. Copper or lead is not used as the metal 48 because of its toxicity. Expensive materials such as gold are not adopted in view of the economy.

The tourmaline 46 and the metal 48 are preferably mixed at a ratio by weight of approximately 10:1~1:10.

The cartridge 44 is in the form of a hollow cylinder opened at one end thereof and has a multitude of holes 52 at the bottom 50 thereof. The size of the holes is so set that where the tourmaline mixture 46 and the metal 48 are placed in the cartridge 44, the tourmaline 46 and the metal 48 do not pass through the holes 52 at the bottom 50.

A shown in Fig. 3, the respective cartridges 44 have a multitude of holes 52 at the bottom 50 thereof, on which the tourmaline 46 and the metal 48 are placed. It is so designed that water is run from the bottom toward to the top of the respective cartridges 44. More particularly, in the cartridges 44, water passing through a multitude of holes 52 at the bottom 50 is passed as jetting upwardly through the tourmaline 46 and the metal 48. It will be noted that the size and number of the holes are so set:city water has a high hydraulic pressure and such pressurized water is caused to vigorously collide with the tourmaline 46 and the metal 48; and in this condition, the tourmaline 46 and the metal 48 are agitated in the cartridges 46 by the force of the pressurized water. The agitation of the tourmaline 46 and the metal 48 in the respective cartridges 44 by the force of water being passed may be effected by various procedures using, for example, known existing agitating means.

The reason why the tourmaline is agitated by jetting water toward the tourmaline is that the tourmaline and water are frictionally contacted under the agitation, with the result that the electrodes are dissolved out in water to cleave the clusters of water, thereby generating a large quantity of hydronium ions ($H_3O^+$). The jetting of pressurized water such as city water through the holes 52 toward tourmaline may omit additional provision of any agitator means.

In practical installment instance, four cartridges 44, each having an accommodation capacity with an inner diameter of 5 cm and a depth of 7 cm, are put one on another. The tourmaline 44 and the metal 48 are charged in the respective cartridges 44 in such an amount that the tourmaline 46 and the metal 48 can be freely moved within the cartridge 44. Although the number of the cartridges 44 may be increased or decreased, only one cartridge 44 having a great accommodation capacity may be used.

The tourmaline 46 and the metal 48 are, respectively, placed in a plurality of cartridges 44 having a reduced capacity. The plural cartridges 44 are connected wherein the agitation efficiency of the tourmaline 46 and the metal 48 by the force of water can be enhanced.

The tourmaline 46 contained in the cartridge 44 disappears in several months by dissolution in water. The cartridges 44 are arranged as to be readily detached such as by screwing, permitting easy supplement of the tourmaline 46 in the respective cartridges 44. It will be noted that it is not necessary to supplement the metal which is not dissolved in water but a fresh cartridge containing the tourmaline 46 and the metal 48 may be used for replacement with a used one, The capacity of the cartridge 44 may vary depending on the flow rate.

The tourmaline 46 has plus and minus electrodes. When tourmaline is agitated in water, water ($H_2O$) dissociates into hydrogen ion ($H^+$) and hydroxide ions ($OH_-$)

$$H_2O \rightarrow H^+ + OH^- \tag{1}$$

Further, hydronium ions ($H_3O^+$) having the surface activity are produced from the hydrogen ions ($H^+$) and water ($H_2O$). The amount of the produced hydronium ions ($H_3O^+$) is far much larger than that generated by means of the ion exchange resin 32.

$$H_2O + H^+ \rightarrow H_3O^+ \tag{2}$$

Part of the hydronium ions ($H_3O^+$) combines with water ($H_2O$) to form hydroxyl ions ($H_3O_2^-$) and hydrogen ions ($H^+$).

$$H_3O^+ + H_2O \rightarrow H_3O_2^- + 2H^+ \tag{3}$$

The hydroxyl ions ($H_3O_2^-$) have high surface activity like hydronium ions ($H_3O^+$), serving to cleanse clothes.

The water passed through the ion exchange resin 32 is further passed through the ion generator 14. Eventually, hydronium ions ($H_3O^+$), hydroxyl ions ($H_3O_2^-$), $H^+$ and $OH^-$ are generated in water. The chlorine passed through the ion exchange resin 32 and the $Na^+$ generated at the ion exchange resin 32 pass through the ion generator as they are without undergoing any reaction.

The water passed through the ion generator is further passed through the rock accommodating container wherein a rock 54 bearing minus electrons is accommodated. The minus electron-bearing rock 54 which is known at present includes obsidian, perlite, or fluolite.

The present invention contemplates to provide city water converted not only to clear water, but also to "tasty" water. As we have checked 100 famous waters selected in Japan, which are said to be tasty, it has been found three brands in which no floating matter such as water bloom is present. Where some suspended matters such as water bloom are contained, it has been hitherto very difficult to simply eliminate the matter from the water. When studies were made on a rocksite through which the water of these brands ran, it was found that obsidian, perlite, or fluolite associated with the rock site. We also found that these rocks commonly bore minus electrons and did not permit water to be contaminated with suspended matters such as water bloom.

These obsidian, perlite and fluolite rocks of their origin have, respectively, an oxidation-reduction potential of -20~-40 mmv. It has been found that when these obsidian, perlite and fluorite rocks are processed into perlite (one obtained by breaking obsidian into pieces and heating to not lower than 800°C) the oxidation-reduction potential increases to -100~-300 mmv. Accordingly, although the rock 54 bearing the minus electrons may be composed of raw ores of obsidian, perlite and fluolite, the perlite obtained therefrom is preferred. It will be noted that the rock 54 should not be one which is soluble in water and which contains something harmful for drinking water. The rock accommodating container 16 is, for example, in the form of a hollow cylinder having an inner diameter of 10 cm and a height of 80 cm. In the cylinder, there are contained granules of the minus electron-bearing rock 54 having a size of 5 mm~50 mm in an amount not reducing the flow rate of water being passed.

When the water passed through the ion generator 14 is run through the rock accommodating container 16, e- (minus electrons) is added to the water. As a consequence, the chlorine (Cl) in the city water is converted to chlorine ions by the action of the minus electrons.

$$Cl + e^- \rightarrow Cl^- \tag{4}$$

The $Cl^-$ and the afore-indicated $Na^+$ are, respectively, in stable condition. The stable condition means that these ions are kept over a long time without evaporation. The hydroxyl ions ($H_3O_2^-$) are also in stable condition.

By the passage of the water through the rock 54, hydronium ions ($H_3O^+$) are more generated in comparison with the case of water passed through the ion generator 14, along with hydroxyl ions ($H_3O_2^-$) being further generated.

$$H_2O + H^+ \rightarrow H_3O^+ \tag{2}$$

$$H_3O^+ + H_2O \rightarrow H_3O_2^- + 2H^+ \tag{3}$$

The passage of water through the rock 54 brings about the following reactions other than those mentioned above.

$$OH^- + H^+ \rightarrow H_2O \tag{5}$$

$$2H^+ + 2e^- \rightarrow 2H_2 \tag{6}$$

Moreover, when water is passed through the rock accommodating container 16, the oxidation-reduction potential of the water is changed from +340 mmv to -20~-240 mmv by means of the minus electrons of the rock 54. Using hot water in placed of water, the minus oxidation-reduction potential becomes more stabilized.

As stated hereinabove, water is initially passed through the ion exchange resin 32, then through the tourmaline 46 and the metal 48 and finally through the rock 54 thereby obtaining water (hereinafter referred to "refreshed water"). The refreshed water contains $Na^+$, $Cl^-$, $H^+$, $OH^-$, hydronium ions ($H_3O^+$) and hydroxyl ions ($H_3O_2^-$). The refreshed water has an electromagnetic wave with a wavelength of 4~14 micrometers whose energy is 0.004 watts/cm$^2$ and also has an oxidation-reduction potential of -20~-240 mmv.

The results of quality inspection of the refreshed water are as follows. The values for city water are indicated in parentheses for comparison with the refreshed water provided that the values of city water same as those of the refreshed water are indicated as (same).

The nitrous acid-derived nitrogen and nitric acid-derived nitrogen: 1.8 mg/l (same), chlorine ion: 6.8 mg/l (9.0 mg/l), general bacteria: 0/ml (same), cyan ion: less than 0.01 mg/l (same), mercury: less than 0.0005 mg/l (same), organic phosphorus: less than 0.1 mg/l (same), copper: less than 0.01 mg/l (same), iron: less than 0.05 mg/l (less than 0.080 mg/l), manganese: less than 0.01 mg/l (same), zinc: less than 0.05 mg/l (less than 0.054 mg/l), lead: less than 0.01 mg/l(same), hexavalent chromium: less than 0.02 mg/l (same), cadmium: less than 0.005 mg/l (same), arsenic: less than 0.005 mg/l (same), fluorine: less than 0.15 mg/l (same), calcium・magnesium (hardness): 1.2 mg/l (49.0 mg/l), phenols" less than 0.005 mg/l(same), anionic surface active agent: less than 0.2 mg/l(same), pH value: 6.9 (same), odor no offensive odor (same), taste:not abnormal taste (same), chromaticity: 2 degrees (same), and turbidity: 0 degree (one degree).

The refreshed water has the following many effects:

Having surface activity

The hydronium ions ($H_3O^+$) and hydroxyl ions ($H_3O_2^-$) present in the refreshed water has surface activity (O/W type emulsion emulsifying action). If the refreshed water is placed and used in washing machines, any detergent is not necessary. This water may be applied not only to for washing in washing machines, but also to all the fields where detergents are used , e. g. such as in ware-washing machines or for washing bath tubs. More particularly, when the refreshed water is used for washing in ware-washing machines or bath tubs, table wares and the like may be washed without use of any detergent. The use of the refreshed water makes no use of any detergent, with good economy. In addition, anecological contamination problem caused by free discharge of washings could be avoided.

Having a very weak energy (rearing light ray)

Tourmaline emits a very weak energy (an electromagnetic wave with a wavelength of 4~14 micrometers). This weak energy subjects great clusters of water to scission, permitting toxic gases or heavy metals included in the cluster to emit to outside. More particularly, when a very weak energy (an electromagnetic wave with a wavelength of 4~14 micrometers) is applied to the cluster, a harmful gas escapes in the air and heavy metals settle down. Thus, the resultant water is harmless, which men can drink for health. This weak energy may be called a rearing light ray and is an absorbable light which is more susceptible to absorption in material bodies, animals and plants. The weak energy absorbed in material bodies, animals and plants produce good influences on the materials bodies and the cells of animals and plants including human beings, expediting the growth of organisms.

It will be noted that while the cells of human body has an energy of 0.003 watts/cm$^2$, the energy of the 4~14 micrometer electromagnetic wave-emitting substance from tourmaline is 0.004 watts/cm$^2$. Thus, the weak energy is similar to that of men with respect to the wavelength and energy level, so that it is resonantly absorbed in the human body. The very weak energy is high by 0.001 watt/cm$^2$ than that of the human body. This would excite the atoms, molecules and cells of the human body, bringing about a good influence on the human health. In particular, the energy which is higher by 0.001 watt/cm$^2$ than that of the human body serves to remove by reduction active oxygen which exists in the human body and would cause diseases.

Antifungal and bactericidal actions

Aluminum, stainless steels and silver used as the metal 48 have all the antifungal and bactericidal actions. Where Na$^+$ is generated by means of the ion exchange resin 32, Na$^+$ also exhibits the antifungal and bactericidal actions. When drinks are made by use of refreshed water or where foods are dipped in refreshed water, little decay takes place as compared with the case using city water. Moreover, refreshed water is applied to plants, the plants are unlikely to be infested with harmful insects or worms.

Bleaching action

Aluminum has the bleaching action. If aluminum is added in large amounts, a bleaching effect appears on washing.

Action of retarding evaporation of water

City water and refreshed water used in an amount, for example, of 1000 cc are, respectively, heated from normal temperature for comparison. The temperature at which bubbles appear is 36°C or higher for the city water and 43°C or higher for the refreshed water. The temperature at which vapor appears is 40°C or higher for the city water and 48°C or higher for the refreshed water. Thus, the temperatures at which bubbles and vapor started to appear are higher for the refreshed water than for the city water. This is considered to result from the minus electrons of the rock 54.

The temperatures at which bubbles and vapor started to appear are higher for refreshed water than for city water. If something is boiled, refreshed water is higher in boiling time than city water because vapor is more unlikely to develop for the refreshed water than for the city water. Moreover, evaporation proceeds more slowly for the refreshed water, so that the amount or number of water being applied to flowering plants may be reduced.

Cooling action

Water passed through the rock 54 having minus electrons has an oxidation -reduction potential of -20~-240 mmv and its temperature becomes lower by 2~3°C than that of ordinary water. Thus, refreshed water has an effect of preserving and cooling such as of foods.

Suspended matter-eliminating action

Where suspended matters such as water bloom are present in water, they can be eliminated.

[Second Example]

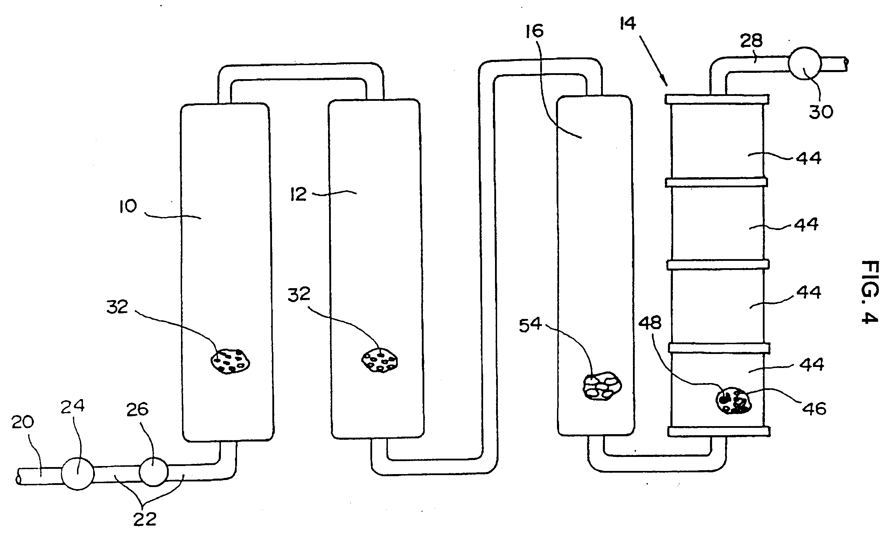

In the first example, water is passed through the ion exchange resin 32, tourmaline 42 and metal 48 and rock 54 in this order. It is possible to pass water the ion exchange resin 32, rock 54, and tourmaline 46 and metal 48 in this order. More particularly, as shown in Fig. 4, water may be passed through the first soft water generator 10, second soft water generator 12, rock accommodating container 16 and ion generator 14 in this order. In this case, it is so arranged that water is moved in the ion generator from the bottom toward the top thereof.

In this second example, water passed through the ion exchange resin is then passed through the rock 54. By the action of the rock 54, e- (minus electrons) is generated in water. As a result, chlorine present in city water is converted into chlorine ions by means of the minus electrons.

$$Cl + e^- \rightarrow Cl^- \tag{4}$$

$Cl^-$ and the $Na^+$ generated by the action of the ion exchange resin 32 are in stable condition as ions. Water which has been passed through the ion exchange resin 32 may not contain any $Na^+$.

The water passed through the ion exchange resin 32 has, as shown in the afore-indicated formulas (1) and (2), $H^+$, $OH^-$ and hydronium ions ($H_3O^+$). The water passed through the ion exchange resin 32 is passed through the rock 54, whereupon the following reactions take place.

$$OH^- + H^+ \rightarrow H_2O \tag{5}$$

$$H_2O + H^+ \rightarrow H_3O^+ \tag{2}$$

$$2H^+ + 2e^- \rightarrow 2H_2 \tag{6}$$

In these reactions, the hydronium ions ($H_3O^+$) are produced in amounts larger than those generated through the ion exchange resin 32.

As stated hereinabove, when water is passed through the rock 54 after passage through the ion exchange resin 32, $Cl^-$ and hydronium ions ($H_3O^+$) are additionally generated along with $Na^+$ and $Cl^-$ which have been present in the water. The water passed through the rock 54 has an oxidation-reduction potential of -20~-240 mmv. If hot water is used in place of water, the minus oxidation-reduction potential becomes more stabilized.

The water passed through the rock 54 is passed through the ion generator 14 containing the tourmaline and the metal 48 therein, undergoing the following reactions.

$$H_2O \rightarrow H^+ + OH^- \tag{1}$$

$$H_2O + H^+ \rightarrow H_3O^+ \tag{2}$$

The hydronium ions ($H_3O^+$) are generated in large amounts. Part of the hydronium ions ($H_3O^+$) is converted to hydroxyl ions ($H_3O_2^-$)

$$H_3O^+ + H_2O \rightarrow H_3O_2^- + 2H^+ \tag{3}$$

As a result, the water which has been passed through the tourmaline 46 and the metal 48 contains $Na^+$, $Cl^-$ and $OH^-$, which have been present in the water, along with the hydronium ions ($H_3O^+$), hydroxyl ions ($H_3O_2^-$) and $H^+$.

More particularly, the refreshed water created in the second example and the refreshed water created in the first example have, respectively, have $Na^+$, $Cl^-$, $OH^-$, hydronium ions ($H_3O^+$), hydroxyl ions ($H_3O_2^-$) and $H^+$, and are the same in composition. Moreover, the refreshed water has a 4~14 micrometer electromagnetic wave having an energy of 0.004 watts/cm$^2$ and an oxidation-reduction potential of -20~-240 mmv. As a result, the refreshed water produced in the second example has the same effect as one obtained in the first example.

[Third Example]

In the third example, there are not used the first soft water generator 10 and the second soft water generator 12 in Fig. 1, but the ion generator 14 having the tourmaline 46 and the metal 48 and the rock accommodating container 16 having the rock 54 therein are connected in series.

Not passed through the ion exchange resin, city water passed to the ion generator 14 contains metal ions such as $Ca^{2+}$, $Mg^{2+}$, $Fe^{2+}$ and the like without elimination. As shown in the afore-indicated formulas (1) and (2), $H^+$, $OH^-$ and hydronium ions ($H_3O^+$) are not generated as well.

When city water is passed through the ion generator 14, hydrogen ions ($H^+$) and hydroxide ions ($OH^-$) generate.

$$H_2O \rightarrow H^+ + OH^- \tag{1}$$

Of these hydrogen ions ($H^+$) and hydroxide ions ($OH^-$), the hydrogen ions ($H^+$) combine with water ($H_2O$) to form

hydronium ions ($H_3O^+$).

$$H_2O + H^+ \rightarrow H_3O^+ \qquad (2)$$

The hydronium ions ($H_3O^+$) have the surface activity and serve to cleanse clothes.

In the water which has passed through the ion generator 14 containing the tourmaline 46 and the metal 48, there are generated $H^+$, $OH^-$ and hydroxyl ions ($H_3O_2^-$).

The water has an electromagnetic waver with a wavelength of 4~14 micrometers having an energy of 0.004 watts/cm$^2$.

The water passed through the ion generator 14 is passed through the rock accommodating container having the rock therein, in which chlorine contained in the city water is converted to chlorine ions by the action of minus electrons.

$$Cl + e^- \rightarrow Cl^- \qquad (4)$$

The $Cl^-$ is in stable condition as ions. The stable condition means that the ionic condition is kept over a long time without evaporation. In addition, hydronium ions ($H_3O^+$) also generate. Part of the hydronium ions ($H_3O^+$) react with water to provide hydroxyl ions ($H_3O_2^-$).

$$H_3O^+ + H_2O \rightarrow H_3O_2^- + 2H^+ \qquad (3)$$

The hydroxyl ions ($H_3O_2^-$) are in stable condition as ions. The passage of the water through the rock 54 entails the following reactions.

$$OH^- + H^+ \rightarrow H_2O \qquad (5)$$

$$2H^+ + 2e^- \rightarrow 2H_2 \qquad (6)$$

The passage of the water through the rock 54 results in the formation or presence of $OH^-$, $H^+$, hydronium ions ($H_3O^+$) and hydroxyl ions ($H_3O_2^-$).

The passage of the water through the rock 54 leads to an oxidation-reduction potential of -20~-240 mmv.

In this third example, water is not passed through an ion exchange resin, so that metal ions such as $Ca^{2+}$, $Mg^{2+}$, $Fe^{2+}$ and the like are contained in water, which differs from the first and second examples. More particularly, final water is hard water and is lower in detergent effect than water obtained in the first and second examples. Since any $Na^+$ is not contained, antifungal and bactericidal actions lower slightly.

However, water is passed through the metal and is thus imparted with an electromagnetic wave whose wavelength ranges 4~14 micrometers and an oxidation-reduction potential of -20~-240 mmv. Hence, refreshed water has the very weak energy (rearing light ray) of (b), antifungal and bactericidal actions of (c), bleaching action of (d), action of retarding evaporation of water of (e), cooling action of (f) and eliminating action for suspended matter of (g).

[Fourth Example]

In this fourth example, the ion generator 14 and the rock accommodating container 16 used in the third example are replaced from each other in the order. Since water is not passed through the ion exchange resin 32, it is initially passed through the rock 54, followed by passage through a mixture of the tourmaline 46 and the metal 48. Similar to the third example, metals such as $Ca^{2+}$, $Mg^{2+}$, $Fe^{2+}$ and the like are contained in final water but any $Na^+$ is not contained.

When city water is passed through the rock accommodating container 16, chlorine is converted ton chlorine ions by means of minus electrons.

$$Cl + e^- \rightarrow Cl^- \qquad (4)$$

The water passed through the rock 54 is passed through a tourmaline mixture 46 and a metal 48 to permit water ($H_2O$) to dissociate into hydrogen ($H^+$) and hydroxide ion ($OH^-$).

$$H_2O \rightarrow H^+ + OH^- \qquad (1)$$

Of these hydrogen ions ($H^+$) and hydroxide ions ($OH^-$), the hydrogen ions ($H^+$) and water ($H_2O$) combines to generate hydronium ions ($H_3O^+$).

$$H_2O + H^+ \rightarrow H_3O^+ \qquad (2)$$

More particularly, when water is passed through the rock 54, ($OH^-$), $H^+$ and $H_3O^+$ are formed as shown in (1) and (2). Moreover, the passage of water through the rock 54 results in water having an oxidation-reduction potential of -20~-240 mmv.

The water passed through the rock 54 is in turn passed through the ion generator 14 containing the tourmaline 46 and the metal 48. By this, hydronium ions ($H_3O^+$) further generates. Part of the hydronium ions ($H_3O^+$) reacts with water to provide hydroxyl ions (($H_3O_2^-$).

$$H_3O^+ + H_2O \rightarrow H_3O_2^- + H^+ \qquad (3)$$

When water passes through the rock 54, the following reaction takes place.

$$OH^- + H^+ \rightarrow H_2O \qquad (5)$$

With the water which has been initially passed through the rock 54 and then through the tourmaline mixture 46 and the metal 48, $Cl^-$, $OH^-$, hydronium ions ($H_3O^+$) and hydroxyl ions (($H_3O_2^-$) generate as shown in (4), (1), (2) and (3). The water has an electromagnetic wave with a wavelength of 4~14 micrometers.

In this fourth example, since water is not passed through an ion exchang eresin, metals such as $Ca^{2+}$, $Mg^{2+}$, $Fe^{2+}$ and the like are contained in final water. This differs from the cases of the first and second examples. As a result, water obtained is hard water and is lower in detergency than the water obtained in the first and second examples. Since $Na^+$ is not contained, the antifungal and bactericidal actions lower slightly.

However, since water is passed through the metal 48 and thus, has an electromagnetic wave whose wavelength is 4~14 micrometers and an oxidation-reduction potential of -20~-240 mmv, the resultant water has the very weak energy (rearing light ray) of (b), antifungal and bactericidal actions of (c), bleaching action of (d), action of retarding evaporation of water of (e), cooling action of(f) and eliminating action for suspended matter of (g).

[Effect of The Invention]

As stated hereinbefore, in the method of making water having the purified and activated functions, water may be passed through an ion exchange resin, tourmaline and the like, and rock in this order or may be passed through the ion exchange resin, rock and tourmaline in this order. By this, the resultant was has the surface active action, very weak energy (rearing light ray) action, antifungal and bactericidal actions, bleaching action, action of retarding evaporation of water, cooling action and suspended matter-eliminating action.

Accordingly, if the water obtained by the invention is used from the standpoint of the surface activity, laundering or washing of bath tubs can be effected without use of any detergent, thus being good in economy and not causing any environmental contamination. When the water prepared by the invention is used from the standpoint of the very weak energy(rearing light ray) action, it can be used as drinking water as being good to the health because the atoms, molecules and cells of the human body can be brought into an excited condition. Moreover, the water expedites the growth of animals and plants and keeps fishes and shellfishes and plants fresh over a long time. If the water obtained by the invention is used from the standpoint of the antifungal and bactericidal actions, drinks and foods using the water are kept fresh over a time longer than those using city water. When refreshed water is applied to plants, the plants are unlikely to be infested with harmful insects or worms. From the standpoint of the bleaching action, the water obtained by the invention can bleach clothes on laundering. From the standpoint of the action of retarding evaporation of water, the water obtained by the invention can boil up more quickly than city water since temperatures at which bubbles or vapor starts to appear are higher than with city water. Since the evaporation rate is smaller, the amount and number of water being supplied to flowing plants can be reduced. From the standpoint of the cooling action, the water obtained in the present invention is lower in temperature, so that it feels tasty and is adapted for storage of foods. From the standpoint of suspended matters, the suspended matter can be fully eliminated to provide clear water.

In the practice of the invention, when water is passed first through either of tourmaline and rock and then through the other without use of any ion exchange resin, there can be obtained refreshed water which has the surface activity, very weak energy (rearing light ray) action, antifungal and bactericidal actions, bleaching action, action of retarding evaporation of water, cooling action and action of eliminating suspended matter. In this case, metal ions such as $Ca^{2+}$, $Mg^{2+}$, $Fe^{2+}$ and the like are not removed, with a slight lowering of the surface activity but other actions undergoing little change.

EP 0 728 703 B1

In conventional water purifying apparatus, electricity is used for generation of ions, with higher costs and with the need of aftercare. On the contrary, in the apparatus of the invention, it is sufficient to wash or supplement materials without any specific maintenance. In addition, anyone can readily washor supplement the materials without difficulty.

## Claims

1. A method for making water having purified and activated functions characterized by passing water through a mixture of tourmaline (46) and at least one of aluminium, stainless steel, and silver (48), and a rock (54) of at least one of obsidian, perlite and fluolite, in this order.

2. A method for making water having purified and activated functions according Claim 1, characterized in that said ion exchange resin (32) is able to generate sodium ions through ion exchange.

3. A method for making water having purified and activated functions according to Claim 1, characterized in that said tourmaline (46) and said at least one of aluminium, stainless steel and silver (48) is mixed at a ratio by weight of 10:1~1:10.

4. A method for making water having purified and activated functions according to Claim 1, characterized in that said tourmaline (46) is mixed at not less than 10 wt% relative to a ceramic and heated to 800°C or higher.

5. A method for making water having purified and activated functions according to Claim 1, characterized in that said tourmaline and said at least one of aluminium, stainless steel and silver (48) are a gitated by means of water.

6. A method for making water having purified and activated functions according to Claim 1, characterized in that said rock having minus electrons is heated to 800°C or higher.

7. A method according to any of claims 1 to 6, wherein said water is passed through said mixture (46, 48) and said rock (54) in the opposite order.

8. A method according to any of the preceding claims, wherein said method further comprises a step of passing water through an exchange resin (32) before passing it through said mixture (46, 48) and said rock (54) or said rock (54) and said mixture (46, 48), respectively.

9. An apparatus for making water having purified and activated functions, characterized by comprising a soft water generator (10, 12) for accommodating an ionexchange resin (32) therein, an ion generator for accommodating a mixture of tourmaline and at least one of aluminium, stainless steel and silver (48), and a rock container (16) wherein a rock (54) of at least one of obsidian, perlite and fluolite is accommodated therein, wherein the ion generator and the rock container are connected in series without special order, and the soft water generator is connected in series with the upstream side of the connection of said ion generator and said rock container in a manner such that water passing through the ion generator is jetted against the tourmaline and the metal under a hydraulic pressure to agitate the tourmaline and the metal in the ion generator.

10. An apparatus for making water having purified and activated functions according to Claim 9, characterized in that the water is passed within said ion generator from a bottom toward a top of said ion generator which has small holes on the passage of the water, and the water passed through the small holes isjetted against the tourmaline and the metal to agitate within said ion generator.

11. An apparatus for making water having purified and activated functions according to Claim 9, characterized in that said soft water generator has spaces, at the sides of an inlet and an outlet for the water, which are free of any ion exchange resin.

12. An apparatus for making water having purified and activated functions according to Claim 9, characterized in that a plurality of soft water generators are connected in series.

## Patentansprüche

1. Verfahren zur Herstellung von Wasser mit gereinigten und aktivierten Eigenschatten, dadurch gekennzeichnet, daß Wasser in dieser Reihenfolge durch eine Mischung aus Turmalin (46) und mindestens einem der Materialien Aluminium, rostfreiem Stahl und Silber (48) und ein Gestein (54) aus mindestens einem der Materialien Obsidian, Perlit und Fluolit geleitet wird.

2. Verfahren zur Herstellung von Wasser mit gereinigten und aktivierten Eigenschaften, nach Anspruch 1, dadurch gekennzeichnet, daß das Ionenaustauschharz (32) imstande ist, durch Ionenaustausch Natriumionen zu erzeugen.

3. Verfahren zur Herstellung von Wasser mit gereinigten und aktivierten Eigenschaften, nach Anspruch 1, dadurch gekennzeichnet, daß der Turmalin (46) und das mindestens eine der Materialien Aluminium, rostfreier Stahl und Silber (48) in einem Gewichtsverhältnis von 10:1~1:10 gemischt wird.

4. Verfahren zur Herstellung von Wasser mit gereinigten und aktivierten Eigenschaften, nach Anspruch 1, dadurch gekennzeichnet, daß der Turmalin (46) bei nicht weniger als 10 Gewichtsprozent in bezug auf eine Keramik gemischt wird und auf 800 °C oder höher erwärmt wird.

5. Verfahren zur Herstellung von Wasser mit gereinigten und aktivierten Eigenschaften, nach Anspruch 1, dadurch gekennzeichnet, daß der Turmalin und das mindestens eine der Materialien Aluminium, rostfreier Stahl und Silber (48) mittels Wasser bewegt wird.

6. Verfahren zur Herstellung von Wasser mit gereinigten und aktivierten Eigenschaften, nach Anspruch 1, dadurch gekennzeichnet, daß das Gestein, das Negativelektronen aufweist, auf 800 °C oder höher erwärmt wird.

7. Verfahren nach einem der Ansprüche 1 bis 6, bei dem das Wasser in der entgegengesetzten Reihenfolge durch die Mischung (46, 48) und das Gestein (54) geleitet wird.

8. Verfahren nach einem der vorhergehenden Ansprüche, das weiterhin einen Verfahrensschritt aufweist, Wasser durch ein Austauschharz (32) zu leiten, bevor es durch die Mischung (46, 48) und das Gestein (54) bzw. das Gestein (54) und die Mischung (46, 48) geleitet wird.

9. Vorrichtung zur Herstellung von Wasser mit gereinigten und aktivierten Eigenschaften, dadurch gekennzeichnet, daß sie einen Weichwassergenerator (10, 12) zur Unterbringung eines Ionenaustauschharzes (32) darin, einen Ionengenerator zur Unterbringung einer Mischung aus Turmalin und mindestens einem der Materialien Aluminium, rostfreiem Stahl und Silber (48) und einen Gesteinbehälter (16) aufweist, in dem ein Gestein (54) aus mindestens einem der Materialien Obsidian, Perlit und Fluolit untergebracht ist, wobei der Ionengenerator und der Gesteinbehälter ohne spezielle Reihenfolge in Reihe verbunden sind und wobei der Weichwassergenerator in Reihe mit der stromaufwärtigen Seite der Verbindung des Ionengenerators und des Gesteinbehälters verbunden ist, derart, daß Wasser, das durch den Ionengenerator hindurchgeht, unter hydrostatischem Druck gegen den Turmalin und das Metall gespritzt wird, um den Turmalin und das Metall im Ionengenerator zu bewegen.

10. Vorrichtung zur Herstellung von Wasser mit gereinigten und aktivierten Eigenschaften, nach Anspruch 9, dadurch gekennzeichnet, daß das Wasser innerhalb des Ionengenerators von einer Unterseite in Richtung auf eine Oberseite des Ionengenerators geleitet wird, der kleine Löcher auf dem Weg des Wassers hat, und daß das Wasser, das durch die kleinen Löcher hindurchgegangen ist, gegen den Turmalin und das Metall gespritzt wird, um sie innerhalb des Ionengenerators zu bewegen.

11. Vorrichtung zur Herstellung von Wasser mit gereinigten und aktivierten Eigenschaften, nach Anspruch 9, dadurch gekennzeichnet, daß der Weichwassergenerator Räume an den Seiten eines Einlasses und eines Auslasses für das Wasser hat, die frei von irgendwelchem Ionenaustauschharz sind.

12. Vorrichtung zur Herstellung von Wasser mit gereinigten und aktivierten Eigenschaften, nach Anspruch 9, dadurch gekennzeichnet, daß mehrere Weichwassergeneratoren in Reihe verbunden sind.

**Revendications**

1. Procédé pour préparer une eau ayant des fonctions purifiées et activées, caractérisé par le passage d'eau à travers un mélange de tourmaline (46) et d'au moins un métal parmi l'aluminium, l'acier inoxydable et l'argent (48), et une roche (54) d'au moins l'un parmi l'obsidienne, la perlite et le pechstein, dans cet ordre.

2. Procédé pour préparer une eau ayant des fonctions purifiées et activées selon la revendication 1, caractérisé en ce que ladite résine échangeuse d'ions (32) est apte à générer des ions sodium par échange d'ions.

3. Procédé pour préparer une eau ayant des fonctions purifiées et activées selon la revendication 1, caractérisé en ce que ladite tourmaline (46) et ledit au moins un métal, parmi l'aluminium, l'acier inoxydable et l'argent (48) sont mélangés à un rapport en poids de 10:1 ~ 1:10.

4. Procédé pour préparer une eau ayant des fonctions purifiées et activées selon la revendication 1, caractérisé en ce que ladite tourmaline (46) est mélangée à pas moins de 10 % en poids par rapport à une céramique et est chauffée à 800 °C ou plus.

5. Procédé pour préparer une eau ayant des fonctions purifiées et activées selon la revendication 1, caractérisé en ce que ladite tourmaline (46) et ledit au moins un métal parmi l'aluminium, l'acier inoxydable et l'argent (48) sont agités au moyen d'eau.

6. Procédé pour préparer une eau ayant des fonctions purifiées et activées selon la revendication 1, caractérisé en ce que ladite roche ayant des électrons négatifs est chauffée à 800 °C ou plus.

7. Procédé selon l'une quelconque des revendications 1 à 6, dans lequel on fait passer ladite eau à travers ledit mélange (46, 48) et ladite roche (54) dans l'ordre inverse.

8. Procédé selon l'une quelconque des revendications précédentes, dans lequel ledit procédé comprend en outre une étape consistant à faire passer l'eau à travers une résine échangeuse (32) avant de la faire passer à travers ledit mélange (46, 48) et ladite roche (54), ou ladite roche (54) et ledit mélange (46, 48), respectivement.

9. Appareil pour préparer une eau ayant des fonctions purifiées et activées, caractérisé en ce qu'il comprend un générateur d'eau douce (10, 12) dans lequel se trouve une résine échangeuse d' ions (32), un générateur d'ions dans lequel se trouve un mélange de tourmaline et d'au moins un métal parmi l'aluminium, l'acier inoxydable et l'argent (48) , et un conteneur (16) de roche dans lequel se trouve une roche (54) d'au moins l'un parmi l'obsidienne, la perlite et le pechstein, dans lequel le générateur d'ions et le conteneur de roche sont reliés en série sans ordre spécial, et le générataur d'eau douce est relié en série avec le côté amont du raccord dudit générateur d'ions et dudit conteneur de roche, de manière telle que l'eau passant à travers le générateur d'ions est projetée contre la tourmaline et le métal sous une pression hydraulique pour agiter la tourmaline et le métal dans le générateur d'ions.

10. Appareil pour préparer une eau ayant des fonctions purifiées et activées selon la revendication 9, caractérisé en ce qu'on fait passer l'eau dans ledit générateur d'ions de bas en haut dans ledit générateur d'ions, qui a des petits trous sur le passage de l'eau, et l'eau qui passe à travers les petits trous est projetée contre la tourmaline et le métal pour les agiter dans ledit générateur d'ions.

11. Appareil pour préparer une eau ayant des fonctions purifiées et activées selon la revendication 9, caractérisé en ce que ledit générateur d'eau douce a des espaces, sur les côtés, de l'entrée et de la sortie pour l'eau, qui sont exempts de toute résine échangeuse d'ions.

12. Appareil pour préparer une eau ayant des fonctions purifiées et activées selon la revendication 9, caractérise en ce que plusieurs générateurs d'eau douce sont reliés an série.

13

FIG. 1

FIG. 2

FIG. 3

FIG. 4